Europäisches Patentamt

European Patent Office

Office européen des brevets

(11) Publication number: **0 130 905**

**B1**

(12) EUROPEAN PATENT SPECIFICATION

(45) Date of publication of patent specification: 29.07.87

(51) Int. Cl.⁴: **B 65 G 7/06**

(21) Application number: 84401355.7

(22) Date of filing: 26.06.84

(54) **Air sliding device for work pallets or the like.**

(30) Priority: 28.06.83 JP 116619/83
30.09.83 JP 182249/83

(43) Date of publication of application:
09.01.85 Bulletin 85/02

(45) Publication of the grant of the patent:
29.07.87 Bulletin 87/31

(84) Designated Contracting States:
CH DE FR GB LI

(56) References cited:
DD-A- 127 220
DD-B- 126 436
US-A- 3 493 070

(73) Proprietor: KABUSHIKI KAISHA MYOTOKU
6-18, Shimomaruko 2-chome Ota-ku
Tokyo 146 (JP)

(72) Inventor: Kato, Minoru c/o KABUSHIKI KAISHA
MYOTOKU
6-18, Shimomaruko 2-chome
Ota-ku Tokyo (JP)
Inventor: Tachikawa, Keiichi c/o KABUSHIKI
KAISHA MYOTOKU
6-18, Shimomaruko 2-chome
Ota-ku Tokyo (JP)
Inventor: Ise, Yoji c/o KABUSHIKI KAISHA
MYOTOKU
6-18, Shimomaruko 2-chome
Ota-ku Tokyo (JP)

(74) Representative: Cabinet BERT, DE
KERAVENANT & HERRBURGER
115, Boulevard Haussmann
F-75008 Paris (FR)

Courier Press, Leamington Spa, England.

## Description

### Field of the invention

This invention relates to an air sliding device for work pallets or the like wherein a work pallet or assembling table can be slid by keeping a non--contacting state and perfectly stopped in a predetermined position and which is utilized for various automatic machines.

By the way, the present invention can be utilized also to move tools and working machines.

### Background of the invention

In various automatic machines, it is necessary that a work pallet or assembling table should be slid to any position and perfectly stopped in a predetermined position.

Motors or cylinders are mostly used for the above mentioned sliding but it has been difficult to perfectly stop such pallet or assembling table in a predetermined position.

The present invention is made by eliminating such defect as is mentioned above and is so formed that a work pallet on which a work, tool or working machine is mounted is slid in a noncontacting state and perfectly stopped and sucked in a predetermined position.

In the present invention, when the work pallet slides, air will be jetted from the lower surface of the work pallet so as to form an air film between the work pallet and a base supporting the work pallet to slide the work pallet in a noncontacting state.

Therefore, the wear of the sliding surface can be entirely eliminated and the sliding surface is not required at all to be lubricated or oiled. Further, the force required to slide the work pallet may be so small that, for example, small high precision pulse motors can be used and the device can be made small and cheap. The work pallet can be slid to a predetermined position, perfectly stopped by actuating a clamping device and maintained in a stopping state.

Further, in the present invention, a sucking mechanism is adopted for the above mentioned clamping device.

Said sucking mechanism is different from the conventional sucker made of a flexible member and is so formed that the sucking area may be larger and metals may be sucked to each other so as not to be deviated from each other and not to be easily moved with an applied external force.

That is to say, there have been such defects that the above mentioned conventional sucking mechanism using a mere sucker requires a sucker advancing and returning mechanism, is difficult to manufacture, is expensive and is difficult to maintain in a perfectly stationary state because the sucker is flexible.

According to DD—A—126 436 a device consisting of a pallet gliding on a support part including a peripheral gasket and several internal enclosures equally limited by sealing has already been proposed.

According to this document the sealings are carried out in the form of plungers so that one or the other of the two holes regulating the height of the mechanism plates may be freed. The sealings are in permanent contact with the support part and cannot be contracted when deflated.

Also, the peripheral gasket's effect functioning as plunger is to regulate the height of the pallet together with the holes 14 and 15.

DD—A—126 436 does thus not describe a pallet the gliding of which is carried out without material contact and the stopping of which is carried out by a direct material contact between the lower surface of the pallet and the superior surface of the support.

### Summary of the invention

The present invention is an air cushion pallet to be slid on a base, provided with a groove connected with an air passing hole for forming an air cushion when under air pressure, and with a recess surrounding said groove and connected with another air passing hole and provided with a sealing member which can be moved partly out of the recess under the influence of pressurised air (as known from cited DD—A—126 436) characterised in that the sealing member is a hollow flexible and inflatable element which is open to the bottom of the recess which is provided with the air passing hole and that the pallet is adapted to be slid on the base with the sealing member in its retracted position not touching the base, and to be stopped by sucking air through the air passing hole and simultaneous inflating the sealing member allowing it to touch the base.

### Brief description of the drawings

Fig. 1 is a general perspective view.

Fig. 2 is a sectioned view on line A—A in Fig. 1, showing a sliding state.

Fig. 3 is a sectioned view showing a stopping sucking state.

Fig. 4 is a bottom view of a work pallet.

Fig. 5 is a plan view showing another embodiment.

Fig. 6 is a general perspective view showing another embodiment.

Fig. 7 is a sectioned view on line B—B in Fig. 6.

Fig. 8 is a sectioned view on line C—C in Fig. 6.

Fig. 9 is a bottom view of a work pallet.

Fig. 10 shows still another embodiment and is a sectioned view showing the same part as in the above mentioned Fig. 7.

### Detailed description of the invention

An embodiment of the present invention shall be described in detail in the following with reference to the drawings.

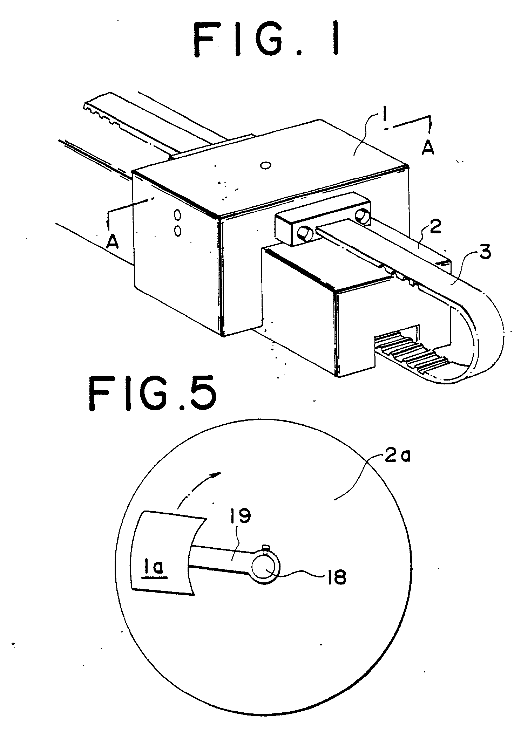

In Fig. 1, the reference numeral 1 denotes a work pallet provided slidably on a base 2.

In the embodiment in the drawing, the work pallet 1 is formed to be gate-shaped, to be fitted to the base 2 from above so as not to be swayed sidewise and to be slid with a timing belt 3.

By the way, concretely a work fixing device, tool or working machine is provided on the work pallet 1.

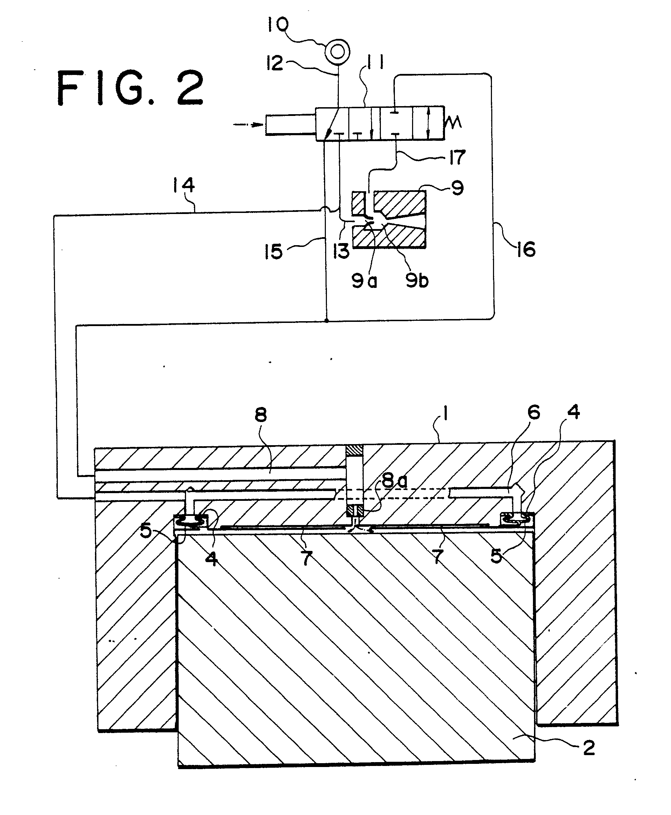

Then, as shown in Figs. 2 to 4, a recess 4 is provided on the periphery of the bottom surface of the above mentioned work pallet 1.

A hollow flexible sealing member 5 closed at the lower end and having a habit of normally contracting to be flat is provided in said recess 4.

Said flexible sealing member 5 is formed of rubber or plastics, is opened above and is fitted in the above mentioned recess 4. An air passing hole 6 provided from the work pallet 1 is connected with the opened part so as to be able to feed air into the flexible sealing member 5 through the air passing hole 6.

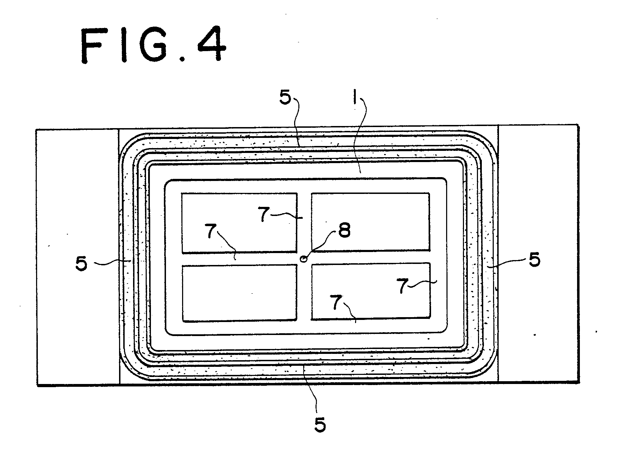

Then a groove 7 is evenly formed on the lower surface of the work pallet 1 except the above mentioned recess 4 as shown in Fig. 4. An air passing hole 8 provided separately from the above mentioned air passing hole 6 in the work pallet 1 is connected with said groove 7. By the way, in the drawing, 8a is an orifice for adjusting the amount of air feed.

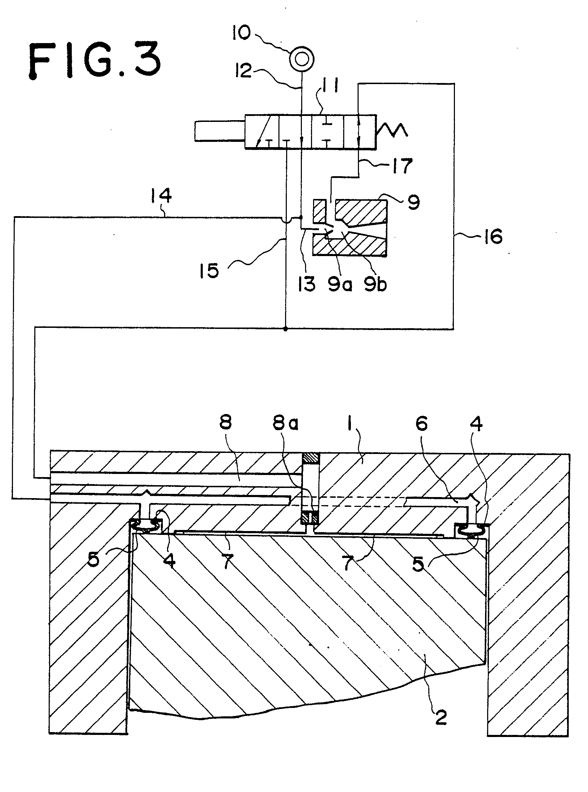

The work pallet 1 of the above mentioned formation is used, for example, as shown in Figs. 2 and 3. In the drawings, 9 is an ejector pump jetting compressed air through a compressed air feeding nozzle 9a to keep an internal partition chamber 9b under a negative pressure.

10 is a compressed air feeding source or concretely a compressor.

Further, 11 is a switching valve to be switched to the compressed air feeding source 10, ejector pump 9 and work pallet 1.

12 is a piping to the switching valve 11 from the compressed air feeding source 10. 13 is a piping to the ejector pump 9 from the switching valve 11. 14 is a piping to the air passing hole 6 of the work pallet 1 from the switching valve 11. 15 is a piping to the air passing hole 8 of the work pallet 1 from the switching valve 11. 16 is a piping to the switching valve 11 from the air passing hole 8 of the work pallet 1. 17 is a piping connecting the switching valve 11 and the partition chamber 9b of the ejector pump 9 with each other.

The case of sliding the work pallet 1 in a noncontacting state in the above mentioned formation shall be described. When the switching valve 11 is switched to be in the state shown in Fig. 2, that is, to feed compressed air to the air passing hole 8 of the work pallet 1, as a result, compressed air will be fed to the air feeding groove 7 part on the bottom surface through the compressed air feeding source 10, piping 12, switching valve 11, piping 15 and air passing hole 8 and the work pallet 1 will be floated up by about 3 to 5 microns.

In such case, air will not be fed to the flexible sealing member 5 as well as to the ejector pump 9.

Therefore, the flexible sealing member 5 will remain contracted to be flat so as not to prevent the work pallet 1 from sliding.

The work pallet 1 may be slid by using the timing belt 3 as shown in Fig. 1 or by utilizing a ball screw and screw, a rack and pinion or a linear motor.

The stopping of the work pallet 1 shall be described in the following. When the above mentioned sliding is stopped and the switching valve 11 is switched as shown in Fig. 3, as a result, compressed air will be no longer fed to the groove 7 part, the work pallet 1 will be mounted on the base 2, compressed air will be fed to the feeding nozzle 9a of the ejector pump 9 through the compressed air source 10, piping 12, switching valve 11 and piping 13, further a part of compressed air will be fed into the flexible sealing member 5 through the piping 14 and air passing hole 6 and said flexible sealing member 5 will be inflated to be pressed into contact with the base 2. At the same time, compressed air will be fed to the feeding nozzle 9a of the ejector pump 9 and the internal partition chamber 9b will be under a negative pressure.

As a result, air in the groove 7 part will be sucked through the piping 16 and air passing hole 8, the bottom surface of the work pallet 1 will be sucked into contact with the base 2 and the work pallet 1 will be perfectly stopped.

The above mentioned sucking contact is different from that of the conventional sucker made of a flexible member, the sucking contact area is larger and the metal surfaces are sucked into contact with each other so as not to be deviated from each other at all and not to be moved by any external force.

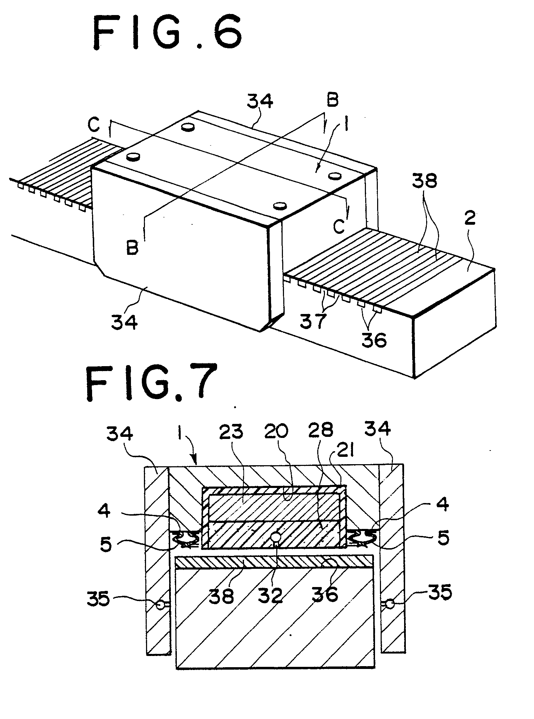

Another embodiment is shown in Fig. 5. That is to say, a table 2a is provided instead of the base and a work pallet 1a is rotated on said table 2a.

In this case, the pillar parts on both sides of the gate-shaped work pallet 1 in the above mentioned embodiment in Figs. 1 to 4 are eliminated, the bottom surface is made flat and an arm 19 provided from a rotary driving shaft 18 provided in the center of the table 2a is connected to the work pallet 1a.

Still another embodiment is shown in Figs. 6 to 10.

Fig. 6 is a general perspective view of this embodiment. In the drawing, 1 is a work pallet and 2 is a base movably supporting the work pallet 1. As shown in Figs. 7 to 9, the work pallet 1 is formed of a plurality of iron cores 22, 23 and 24 set through a nonmagnetic member 21 within a recess 20 on the lower surface of the work pallet 1, two-phase coils 25 and 26, nonmagnetic members 27, 28 and 29 covering respectively the lower surfaces of the iron cores 22, 23 and 24, air feeding holes 30 delivering compressed air and opening on the lower surface of the work pallet 1 including these nonmagnetic members 27, 28 and 29, grooves 31, an air sucking hole 32 introducing a vacuum pressure and a hollow flexible sealing member 5 provided in the recess 4 on the peripheral edge of the lower surface of the work pallet 1 and extending and contracting with the feed and discharge of compressed air from the air feeding hole 33.

By the way, the above mentioned iron cores 22, 23 and 24 are arranged in series in the advancing direction of the work pallet 1 so as to contact with one another.

Further, the groove 31 is connected to the air feeding hole 30 and is formed to be lattice-shaped so as to enclose the air feeding hole 30. The above mentioned air sucking hole 32 is positioned intermediately between the two air feeding grooves 31.

The above mentioned flexible sealing member 5 is shaped to be endless and encloses all of the above mentioned grooves 31, air feeding holes 30 and air sucking hole 32 on the lower surface of the work pallet 1 from outside.

34 is a guide plate fixed on each side of the work pallet 1. The inside surfaces of the guide plates 34 are opposed to both sides of the base 2. An air feeding hole 35 for feeding compressed air to form an air film between the inside surface of the guide plate 34 and the outside surface of the base 2 is provided on the inside surface of each guide plate 34.

The above mentioned base 2 is formed of a conductor. A plurality of serrated projections 37 and recesses 36 are parallelly provided in the lengthwise direction on the surface of this conductor as illustrated. The projection 37 forms a short-circuiting conductor as an inductor for a linear motor so that electricity may be short-circuited at both ends of the projection 37. The magnetic poles of the projections 37, iron cores 22, 23 and 24 and coils 25 and 26 form an induction type linear motor. 38 is a nonmagnetic member embedded in the recess 36.

The operation of such air sliding device shall be detailed in the following.

First of all, when compressed air is forcibly fed to the above mentioned air feeding holes 30 and grooves 31 from such compressed air source as a compressor so as to move the work pallet 1 on the base 2 by a predetermined displacement, the compressed air will be delivered to expand between the lower surface of the work pallet 1 and the upper surface of the base 2, the work pallet 1 will be floated up by the air film formed between them and the expanded compressed air will escape out of the periphery of the lower surface of the work pallet 1. Therefore, the work pallet 1 will be kept in no direct contact with the supper surface of the base 2. At the same time, compressed air will be delivered under the same delivering pressure also from the air feeding holes 35 and both guide plates 34 will be kept in no contact with the sides of the base 2.

When a two-phase alternating current is passed through the above mentioned coils 25 and 26, a composite magnetic flux will move toward the coils 25 and 26 with the time and, by a short-circuited current based on an electromotive force produced by the projections 37 which are short-circuiting conductors, an electromagnetic force by the Fleming's left hand rule will be produced between the short-circuited current and the above mentioned magnetic flux and the work pallet 1 having the coils 25 and 26 integrally will move horizontally. That is to say, in this air sliding device, the work pallet 1 will be floated up by compressed air and the work pallet 1 propelling force will be obtained by the linear motor action.

In the case of moving the work pallet 1 to a predetermined position and stopping it there, when the feed of the compressed air to the air feeding holes 30 and grooves 31 by the above mentioned compressor or the like is stopped, the feed of the current to the above mentioned respective coils 25 and 26 is stopped and now compressed air is introduced into the hollow sealing member 5 through the air feeding hole 33, then the sealing member 5 will be inflated to come into close contact at the tip with the upper surface of the base 2. When the air below the work pallet 1 is then sucked through the air sucking hole 32 by a vacuum pump or the like, the space between the lower surface of the work pallet 1 enclosed with the sealing member 5 and the upper surface of the base 2 will become vacuum and they will temporarily tightly combine together. Thus the work pallet 1 will be stably and positively held in the stopping position.

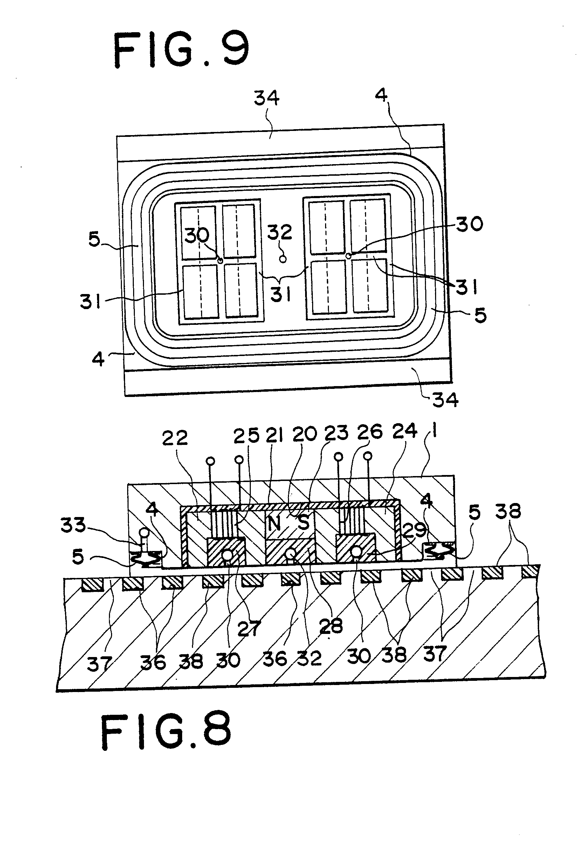

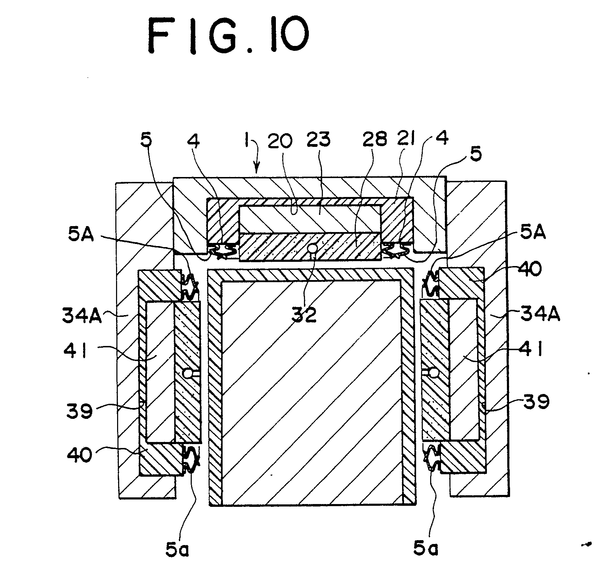

Fig. 10 shows still another embodiment wherein side recesses 39 are provided respectively in two guide plates 34A holding the bases 2 and a plurality of iron cores 41 on which the same coils as are shown in Fig. 9 are fitted through a nonmagnetic member 40 in each recess 39. Projections and recesses are provided also on the base sides opposed to the end surfaces of the iron cores 41. The projections are short-circuiting conductors and these projections and the iron cores 41 having the above mentioned coils wound on them form respectively the same induction type linear motors. The same endless sealing members 5A as are already described are fitted respectively to the peripheries of the surfaces opposed to the base 2 of the guide plates 34A so that compressed air can be fed to the sealing members 5A simultaneously with the above mentioned sealing member 5. By the way, though not illustrated, vacuum pressure introducing air sucking holes acting the same as are described above are present on the sides of the guide plates 34A enclosed with the respective sealing members 5A.

In such embodiment, three sets of linear motors and air sliding devices in the upper part and both side parts are combined to obtain a sufficiently high torque propelling force and position holding force and to be effective to convey heavy works.

**Claim**

Air cushion pallet (1) to be slid on a base (2), provided with a groove (7) connected with an air passing hole (8) for forming an air cushion when under air pressure, and with a recess (4) surrounding said groove and connected with another air passing hole (6) and provided with a sealing member (5) which can be moved partly out of the recess under the influence of pressurised air, characterised in that the sealing member (5) is a hollow flexible and inflatable element which is open to the bottom of the recess (4) which is provided with the air passing hole (6), and that the pallet is adapted to be slid on the base with the sealing member (5) in its retracted position not touching the base, and to be stopped by sucking air through the air passing hole (8) and simultaneous inflating the sealing member (5) allowing it to touch the base.

## Patentanspruch

Luftkissenpalette (1) zum Verschieben auf einer Basis (2), mit einer Aussparung (7), die mit einem Luftdurchlaßkanal (8) verbunden ist, um, wenn unter Luftdruck gesetzt, ein Luftkissen zu bilden, und mit einer Ringnut (4), die die Aussparung umgibt, mit einem weiteren Luftdurchlaßkanal (6) verbunden und mit einem Dichtungsorgan (5) versehen ist, das unter dem Einfluß von Druckluft teilweise aus der Ringnut heraus bewegt werden kann, dadurch gekennzeichnet, daß das Dichtungsorgan (5) ein hohles, flexibles und aufblasbares Gebilde ist, das zum Boden der mit dem Luftdurchlaßkanal (6) verbundenen Ringnut (4) hin offen ist, und daß die Palette auf der Basis (2) verschoben werden kann, wobei sich das Dichtungsorgan (5) in seiner zurückgezogenen, die Basis nicht berührenden Stellung befindet, und durch Absaugen von Luft aus dem Luftdurchlaßkanal (8) angehalten werden kann, wobei gleichzeitig das Dichtungsorgan (5) aufgeblasen wird, so daß es die Basis berührt.

## Revendication

Palette à coussin d'air (1) destinée à glisser sur une embase (2), munie d'une gorge (7) reliée à un orifice de passage d'air (8) pour former un coussin d'air, lorsque la pression d'air est appliquée, et d'un retrait (4) entourant la rainure et se reliant à un autre orifice de passage d'air (6), la palette étant également munie d'un organe d'étanchéité (5) pouvant être entraîné partiellement hors du retrait sous l'influence de l'air comprimé, palette caractérisée en ce que l'organe d'étanchéité (5) est constitué par un élément flexible creux gonflable débouchant dans le fond du retrait (4) muni de l'orifice de passage d'air (6), et en ce que la palette est conçue pour pouvoir glisser sur la base, lorsque l'organe d'étanchéité (5) se trouve dans sa position rétractée ne touchant pas l'embase, et pour être stoppée lorsqu'on aspire de l'air par l'orifice de passage d'air (8) en gonflant simultanément l'organe d'étanchéité (5) pour lui permettre de toucher l'embase.

# FIG. I

# FIG.5

# FIG. 2

# FIG.3

# FIG.4

# FIG.6

# FIG.7

# FIG.9

# FIG.8

# FIG. 10